# EUROPÄISCHE PATENTANMELDUNG

(11) **EP 3 756 940 A1**
(43) Veröffentlichungstag der Anmeldung: **30.12.2020**
(21) Anmeldenummer: 20183002.3
(22) Anmeldetag: 29.06.2020
(51) Int. Cl.: B60N 2/015, B60P 3/32

(54) **FAHRZEUG**

(30) Priorität: 27.06.2019 DE 102019117422
(71) Anmelder: Hymer GmbH & Co. KG, 88339 Bad Waldsee (DE)
(72) Erfinder: Sawetzki, Bernhard, 88364 Wolfegg (DE); Fiedler, Andreas, 89231 Neu-Ulm (DE)
(74) Vertreter: Waller, Stefan

(57) **Zusammenfassung**

Vorgeschlagen wird ein Fahrzeug (1), insbesondere Reisemobil, mit einem Wohnaufbau, der Seitenwände und eine Bodenplatte (3) umfasst, wobei das Fahrzeug eine Sitzeinheit (2) umfasst, wobei die Sitzeinheit (2) mit der Bodenplatte (3) verbunden ist, umfassend wenigstens ein Verbindungsmittel (4, 10), das mit wenigstens einer Seitenwand (5, 6) und der Sitzeinheit (2) verbunden ist und derart gekrümmt oder gewinkelt oder geformt ist, dass eine Umwandlung von Zugkräften in einer Fahrtrichtung (7) des Fahrzeugs (1) in Schubkraft auf wenigstens eine Seitenwand (5,6) des Fahrzeugs (1) erfolgt.

## Beschreibung

Die Erfindung betrifft ein Fahrzeug gemäß dem Oberbegriff des Anspruchs 1.

Fahrzeuge, insbesondere Reisemobile, sind aus dem Stand der Technik bekannt. Reisemobile weisen bekanntermaßen Wohnaufbauten auf. Gerade bei solchen bekannten Reisemobilen ist es oftmals problematisch, dass die Wohnaufbauten gerade in Unfallsituationen u.a. aufgrund oftmals verwendeter Leichtbaumaterialien und etwaiger anderer Gründe besonders schnell beschädigt werden, d.h. eine relativ niedrige Stabilität aufweisen. Dies kann ein erhebliches Sicherheitsrisiko für Insassen solcher Fahrzeuge bedeuten.

Aufgabe der vorliegenden Erfindung ist es, ein Fahrzeug, insbesondere Reisemobil, mit erhöhter Sicherheit, insbesondere in Unfallsituationen bereitzustellen.

Zur Lösung der Aufgabe wird ein Fahrzeug, insbesondere Reisemobil, mit einem Wohnaufbau vorgeschlagen, der Seitenwände und eine Bodenplatte umfasst, wobei das Fahrzeug eine Sitzeinheit umfasst und die Sitzeinheit mit der Bodenplatte verbunden ist.

Erfindungswesentlich ist dabei, dass wenigstens ein Verbindungsmittel umfasst ist, das mit wenigstens einer Seitenwand und der Sitzeinheit verbunden ist und derart gekrümmt oder gewinkelt oder geformt ist, dass eine Umwandlung von Zugkräften in einer Fahrtrichtung des Fahrzeugs in Schubkraft auf wenigstens eine Seitenwand des Fahrzeugs erfolgt.

Über eine derartige Lasteinleitung über Seitenwand bzw. Seitenwände kann die Sicherheit für Fahrzeug-Insassen deutlich erhöht werden.

In einer Weiterbildung der Erfindung kann vorgesehen sein, dass die Sitzeinheit ein Sitzelement und ein mit dem Sitzelement verbundenes Abstützelement umfasst, wobei zwei Verbindungsmittel umfasst sind, wobei ein Verbindungmittel an dem Sitzelement angeordnet, insbesondere befestigt ist und ein Verbindungsmittel an dem Abstützelement angeordnet, insbesondere befestigt ist.

Eine solche Sitzeinheit kann mit sehr geringem Aufwand bereitgestellt werden.

Eine besonders vorteilhafte Ausgestaltung der Erfindung kann vorsehen, dass das wenigstens eine Verbindungselement als verformbares Verbindungselement, insbesondere als Biegequerträger ausgebildet ist.

Ein solcher Biegequerträger kann Verformung für Lastaufnahme zulassen, wodurch die Sicherheit im Fahrzeug signifikant erhöht werden kann, insbesondere in Unfallsituationen. Somit kann ein Fahrzeug bereitgestellt werden, dass in Unfallsituationen für Insassen erhöhte Sicherheit ermöglichen kann.

Um eine flächige Lasteinleitung bereitstellen zu können, kann in einer Ausgestaltung der Erfindung vorgesehen sein, dass das wenigstens eine Verbindungsmittel mit wenigstens einer Seitenwand vorzugsweise mit zwei parallel zueinander angeordneten Seitenwänden befestigt, insbesondere verklebt ist.

Um gegebenenfalls zusätzliche form- und/oder kraftschlüssige Verbindung(en) bereitstellen zu können, kann im Rahmen der Erfindung es möglich sein, dass das wenigstens eine Verbindungsmittel mit den Seitenwänden zusätzlich mittels Bolzen und/oder Schrauben verbunden ist.

Um weitere Lasteinleitung ermöglichen zu können, kann in einer weiteren Ausgestaltung der Erfindung vorgesehen sein, dass die Sitzeinheit zur Lasteinleitung zusätzlich zumindest teilweise mit einem Fahrgestell des Fahrzeugs und/oder mit einer Heckwand des Fahrzeugs verbunden ist.

Eine praktikable Ausgestaltung der Erfindung kann vorsehen, dass die Sitzeinheit mindestens zwei, vorzugsweise drei Sitzplätze bereitstellt.

Erhöhter Sitzkomfort bzw. erhöhter Insassenschutz kann im Rahmen der Erfindung dadurch erzielbar sein, dass die Sitzeinheit wenigstens eine Nackenstütze umfasst. Weiterhin erhöhter Insassenschutz kann im Rahmen der Erfindung dadurch erzielbar sein, dass die Sitzeinheit zumindest einen Gurtverankerungspunkt umfasst.

Erhöhter Insassenschutz kann in einer Ausgestaltung der Erfindung auch dadurch erzielbar sein, dass die Sitzeinheit zumindest ein Befestigungssystem, insbesondere Iso-Fix, umfasst.

Nachfolgend wird eine Ausgestaltung der Erfindung anhand von Zeichnungen näher beschrieben. Es zeigt hierbei
- Fig. 1: eine sehr stark vereinfachte schematische Darstellung eines Ausschnitts einer Ausgestaltung eines erfindungsgemäßen Fahrzeugs und
- Fig. 2: eine teilweise Seitenansicht des in Fig. 1 gezeigten Ausschnitts.

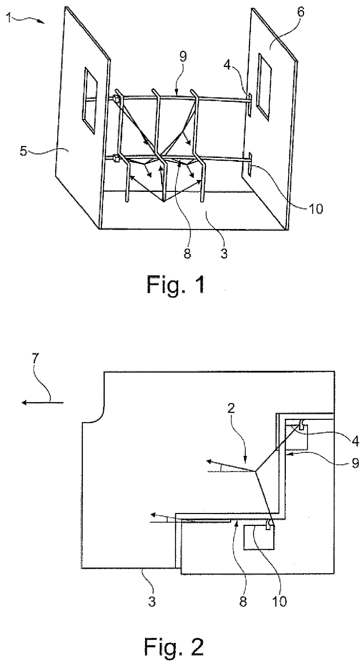

Aus der Fig. 1 ist ein Ausschnitt eines Fahrzeugs 1 in sehr stark vereinfachter schematischer Darstellung gezeigt.

Bei dem Fahrzeug 1 kann es sich zum Beispiel um ein Reisemobil handeln.

Das Fahrzeug 1 umfasst einen Wohnaufbau, der Seitenwände 5, 6 und eine Bodenplatte 3 umfasst. Das Fahrzeug 1 umfasst ferner eine Sitzeinheit 2, die mit der Bodenplatte 3 verbunden ist.

Gezeigt ist in den Fig. 1 und 2, dass ein Verbindungsmittel 4, 10 umfasst ist, das mit wenigstens einer Seitenwand 5, 6 und der Sitzeinheit 2 verbunden ist und derart gekrümmt oder gewinkelt oder geformt ist, dass eine Umwandlung von Zugkräften in einer Fahrtrichtung 7 (siehe Fig. 2) des Fahrzeugs 1 in Schubkraft auf wenigstens eine Seitenwand 5,6 des Fahrzeugs 1 erfolgt.

Über eine derartige Lasteinleitung über Seitenwand bzw. Seitenwände kann die Sicherheit für Fahrzeug-Insassen deutlich erhöht werden.

Im Ausführungsbeispiel gemäß Fig. 1 ist ferner gezeigt, dass die Sitzeinheit 2 ein Sitzelement 8 und ein mit dem Sitzelement 8 verbundenes Abstützelement 9 umfasst. Weiterhin ist dargestellt, dass zwei Verbindungsmittel 4, 10 umfasst sind, wobei ein Verbindungmittel 10 an dem Sitzelement 8 angeordnet, insbesondere befestigt ist und ein Verbindungsmittel 4 an dem Abstützelement 9 angeordnet, insbesondere befestigt ist.

## Patentansprüche

1. Fahrzeug, insbesondere Reisemobil, mit einem Wohnaufbau, der Seitenwände (5, 6) und eine Bodenplatte (3) umfasst, wobei das Fahrzeug eine Sitzeinheit (2) umfasst, wobei die Sitzeinheit (2) mit der Bodenplatte (3) verbunden ist,
**dadurch gekennzeichnet,**
**dass** wenigstens ein Verbindungsmittel (4, 10) umfasst ist, das mit wenigstens einer Seitenwand (5, 6) und der Sitzeinheit (2) verbunden ist und derart gekrümmt oder gewinkelt oder geformt ist, dass eine Umwandlung von Zugkräften in einer Fahrtrichtung (7) des Fahrzeugs (1) in Schubkraft auf wenigstens eine Seitenwand (5,6) des Fahrzeugs (1) erfolgt.

2. Fahrzeug nach Anspruch 1,
**wobei**
die Sitzeinheit (2) ein Sitzelement (8) und ein mit dem Sitzelement (8) verbundenes Abstützelement (9) umfasst, wobei zwei Verbindungsmittel (4, 10) umfasst sind, wobei ein Verbindungmittel an dem Sitzelement (8) angeordnet, insbesondere befestigt ist und ein Verbindungsmittel an dem Abstützelement (9) angeordnet, insbesondere befestigt ist.

3. Fahrzeug nach einem der vorangehenden Ansprüche,
**wobei**
das wenigstens eine Verbindungselement (4, 10) als verformbares Verbindungselement, insbesondere als Biegequerträger ausgebildet ist.

4. Fahrzeug nach einem der vorangehenden Ansprüche,
**wobei**
das wenigstens eine Verbindungsmittel (4, 10) mit wenigstens einer Seitenwand (5, 6), vorzugsweise mit zwei parallel zueinander angeordneten Seitenwänden (5, 6) befestigt, insbesondere verklebt ist.

5. Fahrzeug nach Anspruch 4,
**wobei**
das wenigstens eine Verbindungsmittel (4, 10) mit den Seitenwänden (5, 6) zusätzlich mittels Bolzen und/oder Schrauben verbunden ist.

6. Fahrzeug nach einem der vorangehenden Ansprüche,
**wobei**
die Sitzeinheit (2) zur Lasteinleitung zusätzlich zumindest teilweise mit einem Fahrgestell des Fahrzeugs (1) und/oder mit einer Heckwand des Fahrzeugs (1) verbunden ist.

7. Fahrzeug nach einem der vorangehenden Ansprüche,
**wobei**
die Sitzeinheit (2) mindestens zwei, vorzugsweise drei Sitzplätze bereitstellt.

8. Fahrzeug nach einem der vorangehenden Ansprüche,
**wobei**
die Sitzeinheit (2) wenigstens eine Nackenstütze umfasst.

9. Fahrzeug nach einem der vorangehenden Ansprüche,
**wobei**
die Sitzeinheit (2) zumindest einen Gurtverankerungspunkt umfasst.

10. Fahrzeug nach einem der vorangehenden Ansprüche,
**wobei**
die Sitzeinheit (2) zumindest ein Befestigungssystem, insbesondere Iso-Fix, umfasst.
